# EUROPÄISCHE PATENTSCHRIFT

(11) **EP 1 401 088 B1**
(45) Veröffentlichungstag und Bekanntmachung des Hinweises auf die Patenterteilung: **22.05.2019**
(21) Anmeldenummer: 03012394.7
(22) Anmeldetag: 30.05.2003
(51) Int. Cl.: H02K 9/28, H02K 5/14, H02K 11/04

(54) **Elektrische Maschine und Kühlkörper**
Cooling element for electric machine
Élément de refroidissement pour machine électrique

(30) Priorität: 20.09.2002 DE 10243816
(43) Veröffentlichungstag der Anmeldung: 24.03.2004
(73) Patentinhaber: SEG Automotive Germany GmbH, 70499 Stuttgart (DE)
(72) Erfinder: Acar, Sezgin, 71638 Ludwigsburg (DE)
(74) Vertreter: Steinbauer, Florian

(56) Entgegenhaltungen:
- EP-A- 0 318 009
- FR-A- 2 732 830
- FR-A- 2 789 530
- GB-A- 2 367 193
- US-A- 5 296 772
- US-B1- 6 426 575

## Beschreibung

### Stand der Technik

Die Erfindung betrifft eine elektrische Maschine, insbesondere einen Drehstromgenerator für Kraftfahrzeuge nach der Gattung des unabhängigen Patentanspruchs. Aus der DE 197 05 228 ist eine elektrische Maschine als Drehstromgenerator ausgeführt bekannt, deren Kontaktierungsvorrichtung zur Stromversorgung des Rotors der elektrischen Maschine durch einen sog. Einpassring und einen Bürstenhalter im Prinzip voll gekapselt ist. Diese Vollkapselung führt dazu, dass die Kontaktierungsvorrichtung, hier in Form einer Schleifringbaugruppe, von äußeren Einflüssen, insbesondere von Spritzwasser weitestgehend geschützt ist. Bei dieser Ausführung ist nachteilig, dass einerseits ein relativ großvolumiges Bauteil die Kontaktierungsvorrichtung umgibt und andererseits ein um den Einpassring angeordneter Kühlkörper in seiner radialen Erstreckung nach innen nicht allzu großvolumig ausgeführt werden kann. Bürsten und Schleifringe sind thermisch sehr isoliert. Bei hohen Betriebstemperaturen erhöht sich der Verschleiß und der Spannungsabfall.

Aus der FR 2 732 830 A ist ein elektrische Maschine bekannt, die eine Kontaktierungsvorrichtung mit Schleifringen und Bürsten aufweist. Diese Kontaktierungsvorrichtung ist unmittelbar von einem Schildelement umgeben. Das Schildelement ist einstückig mit einem so genannten Einpassring ausgebildet, in welchen ein Kugellager eingesetzt ist. Dieser Einpassring bzw. das Schildelement ist nicht mit einem Kühlkörper einstückig verbunden.

Aus dem Dokument EP 0 318 009 A2 ist auch eine Kontaktierungsvorrichtung aus Schleifringen und Bürsten bekannt. Diese Kontaktierungsvorrichtung ist unmittelbar von einem Schildelement umgeben. Dieses Schildelement ist ebenfalls nicht mit einem Kühlkörper einstückig ausgeführt.

Aus der US 6 426 575 B1, der GB 2 367 193 A und der US 5 296 772 A sind weitere elektrische Maschinen mit Kontaktierungsvorrichtung und Kühlkörper bekannt.

### Vorteile der Erfindung

Die erfindungsgemäße elektrische Maschine mit den Merkmalen des Hauptanspruchs hat den Vorteil, dass durch das Anordnen des Schildelements als Kapselteil an einem Kühlkörper einerseits der Einpassring in der bekannten Ausführung entfällt und andererseits der Kühlkörper eine weiter vergrößerte Oberfläche erhält und somit besser kühlbar ist. Außerdem wird der Schleifringraum besser durchlüftet und gekühlt. Die Betriebstemperaturen sind bei hoch ausgelasteten Maschinen für die Kohlebürsten und Schleifringe günstiger. Eine günstige Herstellungsweise ergibt sich dadurch, dass das Schildelement einstückig mit dem Kühlkörper verbunden ist.

Durch die in den Unteransprüchen aufgeführten Maßnahmen sind vorteilhafte Weiterbildungen der elektrischen Maschine nach dem Hauptanspruch möglich. Eine besonders günstige Form des Schildelements ist dadurch gegeben, dass das Schildelement im Wesentlichen zylinderringförmig ist. Dies ermöglicht einerseits eine effektive Wärmeleitung und -abgabe und andererseits eine wenig raumeinnehmende Anordnung des Schildelements um die Kontaktierungsvorrichtung.

Erfindungsgemäß ist das Schildelement über Stege mit einem Stromrichterelemente tragenden Kühlkörperteil verbunden, somit ist darüber hinaus zwischen dem Schildelement und dem die Stromrichterelemente tragenden Kühlkörperteil eine gute Durchlüftung und damit eine gute Kühlwirkung möglich. Aus Bauraumgründen kann es erforderlich sein, das Schildelement des Kühlkörpers nicht insgesamt ringförmig auszubilden, sondern beispielsweise nur unterbrochen oder mit einem in axialer Richtung des ringförmigen Schildelements beispielsweise teilweise verkürzten Schildelement. Die daraus resultierende Lücke des Schildelements wird dann geeigneterweise durch ein zweites, weiteres Schildelement geschlossen, damit sich insgesamt über eine bestimmte axiale Länge und insgesamt 360 Winkelgrade eine Rundumkapselung der Kontaktierungsvorrichtung ergibt. Als weiteres zweites Schildelement ist beispielsweise vorgesehen, dass ein Kontaktelementhalter so ausgebildet ist, dass dieser als ein Teil oder einen Teilbereich das zweite Schildelement aufweist.

Nach einer weiteren Ausgestaltung ist vorgesehen, dass eine in einer axialen Richtung geöffnete Seite des durch das Schildelement oder die Schildelemente gebildeten rohrartigen Raums von einer Kappe abgedeckt ist.

### Zeichnungen

In den Zeichnungen sind Ausführungsbeispiele einer erfindungsgemäßen elektrischen Maschine sowie ein Kühlkörper für eine solche elektrische Maschine dargestellt.

Es zeigen:
Figur 1 in vereinfachter Darstellung eine Seitenansicht einer elektrischen Maschine, insbesondere eines Drehstromgenerators,
Figur 2a eine axiale Draufsicht auf den Kühlkörper mit dem Schildelement,
Figur 2b ausschnittweise eine zweite Ausführung der Abdeckung der Kontaktierungselemente,
Figur 3 zeigt eine Schnittdarstellung nach Linie III-III in Figur 2a,
Figur 4 eine axiale Schnittansicht des Kühlkörpers, dessen Schildelement in einer axialen Richtung von einer Kappe abgedeckt ist,
Figur 5 in symbolischer Darstellung einen Kühlkörper mit einem Schildelement.

### Beschreibung

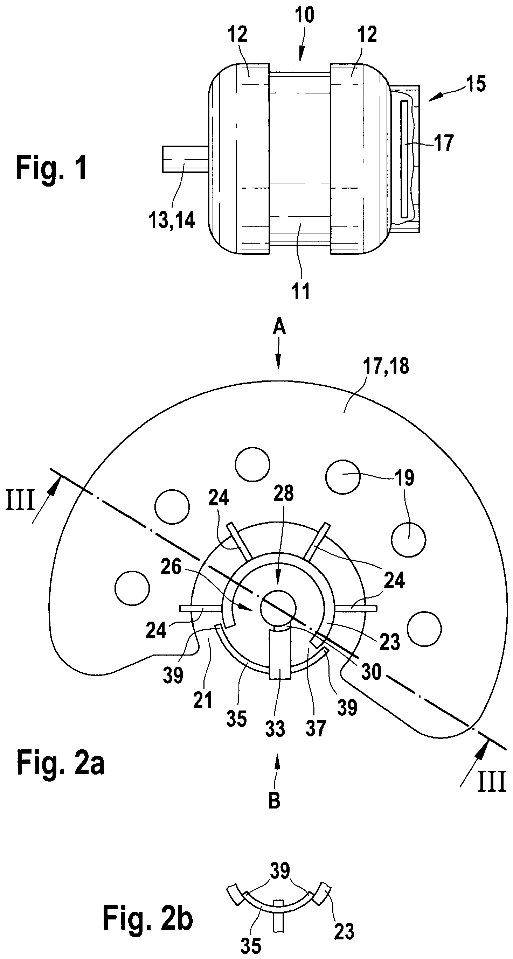

Figur 1 zeigt in vereinfachter Darstellung eine elektrische Maschine 10, die hier als Drehstromgenerator für Kraftfahrzeuge ausgeführt ist. Diese elektrische Maschine 10 besteht aus einem Ständer 11, der beidseitig von je einem Lagerschild 12 gehalten ist. Innerhalb der Lagerschilde 12 und innerhalb des Ständers 11 ist insgesamt ein Läufer 13 angeordnet, dessen antriebsseitiges Ende 14 in Form eines Wellenendes aus einem Lagerschild herausragt. Üblicherweise wird an diesem Ende 14 eine Ringscheibe oder ein anderes Drehmomentübertragungsteil befestigt, um die elektrische Maschine anzutreiben. Ist diese elektrische Maschine 10 auch motorisch betreibbar, so wird über dieses Ende 14, beispielsweise eine Brennkraftmaschine, angetrieben (Startergenerator). An dem dem Ende 14 abgewandten Lagerschild 12 ist in üblicher Weise ein Stromrichterbauteil 15 befestigt, das bei einer Ausführung als Generator ein Gleichrichter ist. Ist die elektrische Maschine 10 beispielsweise als Startergenerator ausgeführt, so ist dieses Stromrichterbauteil 15 ein Wechselrichter. Das Stromrichterbauteil 15 weist u.a. einen Kühlkörper 17 auf, der hier symbolisch dargestellt ist. Im axialen Bereich des Kühlkörpers 17 ist üblicherweise eine Kontaktierungsvorrichtung angeordnet, die einerseits aus am Läufer 13 befestigten Schleifringen und andererseits aus auf diesen Schleifringen gleitenden Kontaktelementen besteht.

Figur 2a zeigt den bereits erwähnten Kühlkörper 17 in einer vergrößerten axialen Ansicht. Der Kühlkörper 17 besteht zunächst aus einem, im Wesentlichen hufeisenförmigen Trägerteil 18, das beispielsweise sechs als Gleichrichterdioden ausgeführte Stromrichterelemente 19 trägt. Der Hufeisenform entsprechend ist das Trägerteil im Wesentlichen ringförmig ausgebildet, bzw. geformt, so dass nach radial innen eine im Wesentlichen ringförmige Öffnung 21 vorhanden ist. In der Öffnung 21 ist ein Schildelement 23 angeordnet, das über Stege 24 einstückig mit dem Trägerteil 18 verbunden ist. Das Schildelement 23 ist im Wesentlichen zylinderringförmig und umgibt zumindest teilweise eine Kontaktierungsvorrichtung 26. Die Kontaktierungsvorrichtung 26 umfasst einerseits auf einem Wellenende des Läufers 13 befestigte Schleifringe 28 und andererseits als sogenannte Bürsten ausgeführte Kontaktelemente 30. Die Kontaktierungsvorrichtung 26 ist demzufolge unmittelbar von zumindest einem Schildelement 23 umgeben. Die Kontaktelemente 30 sind von einem Kontaktelementhalter 33 geführt und getragen. Der Kontaktelementhalter 33 ist hier so ausgebildet, dass dieser ein weiteres zweites Schildelement 35 aufweist und damit Teil des Kontaktelementhalters 33 ist. Eine Öffnung 37 des Schildelements 23 ist somit durch das zweite Schildelement 35 abgedeckt.

Die Öffnung 37 kann dabei auf drei verschiedene Arten abgedeckt sein. Die erste Variante besteht darin, dass die Öffnung 37 von radial außen durch das zweite Schildelement 35 abgedeckt ist. Dabei überlappen zwei Enden 39 des zweiten Schildelements 35 entsprechende Enden des ersten Schildelements 23. Eine solche Ausführung ist von Vorteil, wenn die vorgesehene Anordnung des Kühlkörpers 17 in der elektrischen Maschine 10 derart ist, dass die in der Figur 2a mit B bezeichnete Seite des Kühlkörpers 17 eine Oberseite ist. Mit anderen Worten, es ist wesentlich, dass dann der Kontaktelementhalter 33 auf der von der Erdoberfläche abgewandten Seite der Schleifringe 28 angeordnet ist. Spritzwasser hat dann die Möglichkeit vom zweiten Schildelement 35 abzutropfen, ohne dass dieses Spritzwasser zu den Schleifringen 28 vordringen kann. Die zweite Möglichkeit besteht darin, die Enden 39 des zweiten Schildelements 35 so anzuordnen, dass diese radial innerhalb des ersten Schildelements 23 angeordnet sind, siehe auch Figur 2b. In einer dritten, nicht dargestellten Variante ist vorgesehen, dass die beiden Enden 39 des zweiten Schildelements 35 direkt den beiden Enden des Schildelements 23 gegenüber stehen und somit diese auf gleichem radialen Abstand sind.

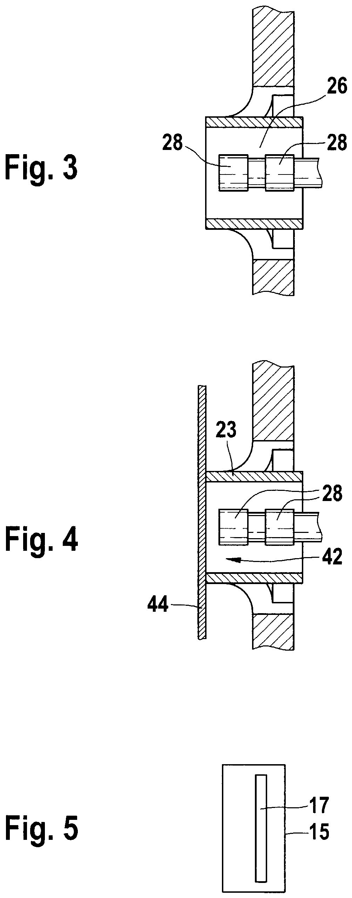

Figur 3 zeigt in einer Schnittansicht gemäß der in Figur 2a eingezeichneten Linie III-III eine weitere Ansicht dessen, wie das Schildelement 23 die Kontaktierungsvorrichtung 26 umgibt.

In Figur 4 ist dargestellt, wie das Schildelement 23 bzw. eine Öffnung 42 in axialer Richtung von einer Kappe 44 abgedeckt ist.

Gemäß der vorhergehenden Beschreibung ist ein Kühlkörper 17 für eine elektrische Maschine 10 vorgesehen, wobei der Kühlkörper 17 ein zumindest teilweise im Wesentlichen ringförmiges Ringelement aufweist, wobei das Ringelement als Schildelement 23 ausgebildet ist, das zur unmittelbaren Abdeckung einer Kontaktierungsvorrichtung 26 dient.

Figur 5 zeigt in symbolischer Darstellung das Stromrichterbauteil 15 mit dem Kühlkörper 17.

Weitere Vorteile dieser Ausführung sind, dass durch die Integrierung des Schildelements 23 in den Kühlkörper 17 der Fertigungsprozess beim Aluminiumdruckgießen verbessert wird. Darüber hinaus verbessern sich die klimatischen Betriebsbedingungen der Kontaktierungsvorrichtung 26. In der Folge ist eine Lebensdauerverlängerung und eine leicht erhöhte Generatorleistung zu erwarten. Das Schildelement 23 überdeckt vorzugsweise mit ca. 270 Winkelgraden die Kontaktierungsvorrichtung 26. Es ist dabei vorgesehen, dass der Spritzschutz bzw. das Schildelement 23 und auch das Schildelement 35 die Kontaktierungsvorrichtung 26 ihrer gesamten Länge überdeckt, so dass kein direkter Wasserstrahl auf radialem Weg zu den Schleifringen 28 gelangen kann. In die Öffnung 37 des Schildelements 23 ragt der Kontaktelementhalter 33. Das Schildelement 23 ist so ausgebildet, dass weiterhin Kühlluft an die zu kühlenden Stellen geleitet werden kann, wobei dieses Schildelement 23 als eine Kühlkörpererweiterung des Kühlkörpers 17 anzusehen ist. Das Schildelement 23 ist in einem weiteren nicht dargestellten Ausführungsbeispiel am Trägerteil 18 beispielsweise durch Nieten oder Schrauben befestigt.

## Patentansprüche

1. Elektrische Maschine, mit einer Kontaktierungsvorrichtung (26) zur Stromversorgung eines Läufers der elektrischen Maschine (10), wobei die Kontaktierungsvorrichtung (26) einerseits auf einem Wellenende des Läufers (13) befestigte Schleifringe (28) und andererseits als Bürsten ausgeführte Kontaktelemente (30) umfasst, wobei die Kontaktierungsvorrichtung (26) unmittelbar von einem Schildelement (23) zumindest teilweise umgeben ist, das an einem Kühlkörper (17) angeordnet ist, **dadurch gekennzeichnet, dass** das Schildelement (23) über Stege (24) mit einem Stromrichterelemente (19) tragenden Trägerteil (18) des Kühlkörpers (17) verbunden ist.

2. Elektrische Maschine nach Anspruch 1, **dadurch gekennzeichnet, dass** das Schildelement (23) im Wesentlichen zylinderringförmig ist.

3. Elektrische Maschine nach Anspruch 1 oder 2, **dadurch gekennzeichnet, dass** die Stromrichterelemente (19) Dioden sind.

4. Elektrische Maschine nach einem der vorstehenden Ansprüche, **dadurch gekennzeichnet, dass** das Schildelement (23) einstückig mit dem Kühlkörper (17) verbunden ist.

5. Elektrische Maschine nach einem der vorstehenden Ansprüche, **dadurch gekennzeichnet, dass** eine radiale Öffnung (37) des Schildelements (23) durch ein weiteres, zweites Schildelement (35) abgedeckt ist.

6. Elektrische Maschine nach Anspruch 5, **dadurch gekennzeichnet, dass** das zweite Schildelement (35) Teil eines Kontaktelementhalters (30) ist.

7. Elektrische Maschine nach einem der vorstehenden Ansprüche, **dadurch gekennzeichnet, dass** das Schildelement (23) in einer axialen Richtung von einer Kappe (44) abgedeckt ist.

8. Elektrische Maschine nach einem der vorstehenden Ansprüche, **gekennzeichnet durch** eine Ausführung als Drehstromgenerator für Kraftfahrzeuge.

## Claims

1. Electrical machine having a contacting device (26) for supplying power to a rotor of the electrical machine (10), wherein the contacting device (26) comprises, on the one hand, slip rings (28) which are fastened to a shaft end of the rotor (13) and, on the other hand, contact elements (30) which are designed as brushes, wherein the contacting device (26) is directly surrounded at least partially by a shield element (23) which is arranged on a heat sink (17), **characterised in that** the shield element (23) is connected via bars (24) to a carrier part (18) of the heat sink (17) carrying current converter elements (19).

2. Electrical machine according to claim 1, **characterized in that** the shield element (23) is substantially cylindrical ring-shaped.

3. Electrical machine according to claim 1 or 2, **characterized in that** the current converter elements (19) are diodes.

4. Electrical machine according to any one of the preceding claims, **characterized in that** the shield element (23) is integrally connected to the heat sink (17).

5. Electrical machine according to any one of the preceding claims, **characterized in that** a radial opening (37) of the shield element (23) is covered by a further, second shield element (35).

6. Electrical machine according to claim 5, **characterized in that** the second shield element (35) is part of a contact element holder (30).

7. Electrical machine according to any one of the preceding claims, **characterized in that** the shield element (23) is covered in an axial direction by a cap (44).

8. Electrical machine according to any one of the preceding claims, **characterized by** an embodiment as a three-phase alternator for motor vehicles.

## Revendications

1. Machine électrique comportant un dispositif de contact (26) pour alimenter en courant un rotor de la machine électrique (10), dans laquelle le dispositif de contact (26) comprend d'une part des bagues collectrices (28) fixées à une extrémité d'arbre du rotor (13) et d'autre part des éléments de contact (30) réalisés sous forme de balais, dans laquelle le dispositif de contact (26) est au moins partiellement entouré directement d'un élément d'écran (23) qui est agencé sur un corps de refroidissement (17), **caractérisée en ce que** l'élément d'écran (23) est relié à une partie de support (18) du corps de refroidissement (17) qui supporte des éléments redresseurs de courant (19) par l'intermédiaire de nervures (24).

2. Machine électrique selon la revendication 1, **caractérisée en ce que** l'élément d'écran (23) est de forme sensiblement cylindrique.

3. Machine électrique selon la revendication 1 ou 2, **caractérisée en ce que** les éléments redresseurs de courant (19) sont des diodes.

4. Machine électrique selon l'une des revendications précédentes, **caractérisée en ce que** l'élément d'écran (23) est relié d'un seul tenant au corps de refroidissement (17).

5. Machine électrique selon l'une des revendications précédentes, **caractérisée en ce qu'**une ouverture radiale (37) de l'élément d'écran (23) est recouverte d'un second élément d'écran (35) supplémentaire.

6. Machine électrique selon la revendication 5, **caractérisée en ce que** le second élément d'écran (35) est une partie d'un support d'élément de contact (30).

7. Machine électrique selon l'une des revendications précédentes, **caractérisée en ce que** l'élément d'écran (23) est recouvert d'un couvercle (44) dans une direction axiale.

8. Machine électrique selon l'une des revendications précédentes, **caractérisée par** une mise en oeuvre sous forme de générateur de courant continu pour des véhicules automobiles.
